# EUROPEAN PATENT APPLICATION

(11) **EP 4 763 563 A1**
(43) Date of publication of application: **24.06.2026**
(21) Application number: 25224371.2
(22) Date of filing: 17.12.2025
(51) Int. Cl.: B60K 7/00, B62D 7/08, B62D 7/18, B62D 17/00

(54) **MOTORISED WHEEL HUB AND ROAD MOTOR VEHICLE PROVIDED WITH SUCH WHEEL HUB**

(30) Priority: 18.12.2024 IT 202400028878
(71) Applicant: FERRARI S.p.A., 41100 Modena (IT)
(72) Inventor: RAMIREZ RUIZ, Isabel, 41100 MODENA (IT)
(74) Representative: Studio Torta S.p.A.

(57) **Abstract**

Motorised wheel hub (1) comprising: a central supporting body (2), which is structured so as to be fixed to the vehicle suspension; an electric motor (3) for auto-traction, which is supported by said central supporting body (2) and is structured so as to support and drive into rotation the wheel of the vehicle (107, 108) about a wheel rotation axis (R); and a spherical electromagnetic rotary actuator (4), which is interposed between the electric motor (3) and the central supporting body (2), and is structured so as to vary the orientation of the electric motor (3) with respect to said central supporting body (2).

## Description

### CROSS-REFERENCE TO RELATED APPLICATIONS

This patent application claims priority from Italian patent application No. 102024000028878 filed on December 18, 2024, the entire disclosure of which is herein incorporated by reference.

### TECHNICAL FIELD

The present invention relates to a motorised wheel hub and to a road motor vehicle provided with such wheel hub.

More specifically, the present invention relates to a wheel hub with an integrated electric motor to be used in high-performance electric or hybrid motor vehicles. Use to which the following disclosure will make explicit reference without thereby any loss of generality.

### STATE OF THE ART

As is known, the camber and toe angles of the wheels (front or rear) of a motor vehicle are crucial for a good vehicle setup and good handling, because they determine the contact patch (i.e. the contact surface) of the tyres and the responsiveness of the vehicle during driving.

As is known, the camber and toe angles of the vehicle wheels should vary in real time while the vehicle is moving, so as to make the tyres work in optimal conditions both in a straight line and when cornering.

It is in fact known that the camber angle should be 0° when the vehicle is moving in a straight line, and should instead be positive or negative when the vehicle is cornering. Clearly, the positive or negative value of the camber angle depends on the position of the wheel with respect to the centre of curvature of the curve.

In the past, there have been developed wheel hubs that are capable of varying, on command and in real time, the camber and toe angles of the vehicle wheel.

Patent applications US2010/0078910 A1 and US2017/ 0217491 A1 describe some of these wheel hubs.

Unfortunately, realizing these particular wheel hubs is extremely expensive and their control during vehicle driving is extremely complicated, thus they have so far only been used experimentally in a very limited number of high-performance prototypes.

In traditional cars, instead, there are chosen compromise camber and toe angles that ensure good tyre behaviour both in a straight line and in a corner.

### SUMMARY OF THE INVENTION

Aim of the present invention is to realize a wheel hub that incorporates the electric motor for auto-traction, i.e. the electric motor adapted to drive into rotation the wheel of the vehicle, and is also capable of varying, on command and in real time, at least the camber angle of the wheel of the vehicle.

In accordance with the above-mentioned aims, according to the present invention there is provided a motorised wheel hub as specified in claim 1 and preferably, though not necessarily, in any of the claims dependent thereon.

According to the present invention there is moreover provided an electric- or hybrid- propulsion road motor vehicle as specified in claim 15.

### BRIEF DESCRIPTION OF THE DRAWINGS

The present invention will now be described with reference to the attached drawings, which show a non-limiting embodiment thereof, wherein:
- Figure 1 is a perspective and schematic view of an electric- or hybrid- propulsion car provided with motorised wheel hubs realized according to the teaching of the present invention, with parts in transparency and parts removed for clarity's sake;
- Figure 2 is a perspective view of one of the wheel assemblies of the car shown in Figure 1, with parts removed for clarity's sake;
- Figure 3 is a partially exploded perspective view of the wheel assembly shown in Figure 2, with parts removed for clarity's sake;
- Figure 4 is an exploded perspective view of the wheel hub shown in the preceding figures, with parts removed for clarity's sake;
- Figures 5 and 6 show, on an enlarged scale, as many details of the electromagnetic rotary actuator shown in Figure 4, with parts removed for clarity's sake;
- Figure 7 is a cross-sectional and enlarged-scale view of the interface zone of the spherical joint of the electromagnetic rotary actuator shown in Figure 4, with parts removed for clarity's sake;
- Figure 8 is a cross-sectional view of the wheel hub shown in the preceding figures, with parts removed for clarity's sake; whereas
- Figure 9 is a cross-sectional view of the wheel hub shown in the preceding figures in a different operating configuration, with parts removed for clarity's sake.

### DETAILED DESCRIPTION OF THE EMBODIMENTS

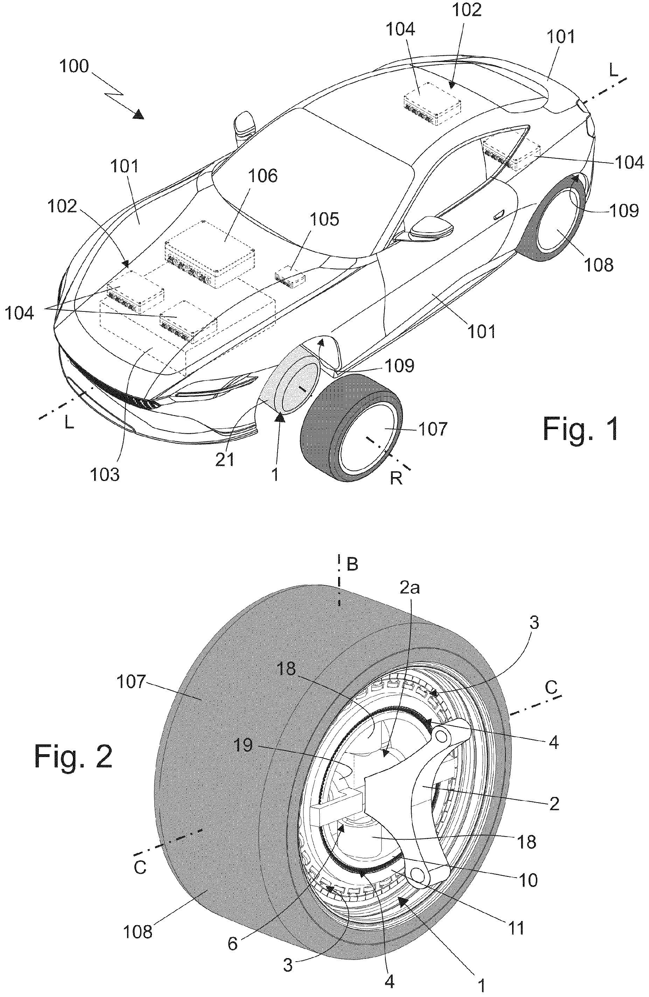

With reference to Figure 1, number 1 denotes as a whole a motorised wheel hub particularly suitable for use in a road motor vehicle 100 with electric or hybrid propulsion. The motor vehicle 100, in turn, is advantageously usable for transporting goods and/or persons.

More specifically, the motor vehicle 100 is provided with a plurality of ground resting wheels. The motorised wheel hub 1, in turn, is structured so as to accommodate/ support a ground resting wheel of the vehicle, and to selectively drive into rotation the same wheel about its central axis.

In other words, the motorised wheel hub 1 is a particular component of the vehicle, on which one of the ground resting wheels of the same vehicle is adapted to be firmly fixed.

More specifically, the ground resting wheel of the vehicle is adapted to be fixed or rather fitted in a rigid and stable, though easily removable, manner on the motorised wheel hub 1, so as to be locally coaxial with a predetermined rotation axis R.

The motorised wheel hub 1, in turn, is adapted to drive into rotation the ground resting wheel about said rotation axis R. More specifically, the motorised wheel hub 1 incorporates an electric motor for auto-traction, which is adapted to drive into rotation the ground resting wheel about said rotation axis R.

With reference to Figure 1, in particular, the motor vehicle 100 preferably comprises: a rigid vehicle-body 101 advantageously with a self-supporting structure, which rests on the ground by means of a plurality of advantageously tyred, ground resting wheels and is provided with a passenger compartment which is structured and dimensioned so as to accommodate the vehicle driver (i.e. the person driving the vehicle) and preferably also at least one passenger advantageously located alongside the same driver; and a distributed powertrain 102, which is located on the rigid vehicle-body 101, and includes at least one motorised wheel hub 1 or, more conveniently, at least one pair of motorised wheel hubs 1, which are advantageously arranged on opposite sides of the vehicle vertical midplane, in a substantially specular position with respect to the same vertical midplane.

In addition, the motor vehicle 100 preferably moreover comprises an electric-energy accumulator 103, advantageously of the rechargeable type, which is located on the rigid vehicle-body 101, and is capable of storing inside itself a given quantity of electric energy to be supplied to the powertrain 102, or rather to each wheel hub 1.

The powertrain 102, in turn, further comprises at least one electric power supply unit 104, which is located on the rigid vehicle-body 101, is interposed between the electric-energy accumulator 103 and the motorised wheel hub or hubs 1, and is adapted to control/regulate the flow of electric energy towards the motorised wheel hub or hubs 1, or rather towards the electric motor incorporated into the or in each motorised wheel hub 1, advantageously as a function of the commands given by the vehicle driver.

More specifically, the powertrain 102 is preferably provided with one electric power supply unit 104 for each motorised wheel hub 1 present in the vehicle.

In addition, the motor vehicle 100 preferably moreover comprises an electronic control unit 105, hereinafter also called the vehicle control unit, which receives and processes the commands given by the vehicle driver, for example via the accelerator pedal or other control (not shown in the figures), and is adapted to command the/each electric power supply unit 104 as a function of said commands.

Preferably, the motor vehicle 100 is finally also provided with a recharging unit 106, which is located on the rigid vehicle-body 101 and is adapted to recharge the electric-energy accumulator 103 when the motor vehicle 100 is connected to an external source of electric energy.

The external source of electric energy can be, for example, a charging station for road vehicles of known type or the traditional domestic electric mains.

More specifically, the electric-energy accumulator 103 and/or the electric power supply unit or units 104 of the powertrain 102 and/or the electronic control unit 105 and/or the recharging unit 106 is/are advantageously accommodated within the rigid vehicle-body 101.

With reference to Figure 1, in the example shown, in particular, the rigid vehicle-body 101 is preferably oblong in shape, and preferably rests on the ground by means of at least one pair of front wheels 107 and at least one pair of rear wheels 108.

Preferably, the front wheels 107 and the rear wheels 108 are moreover located in pairs on opposite sides of the vehicle vertical midplane, substantially at the vertices of a rectangle or an isosceles trapezium. Furthermore, the passenger compartment of the rigid vehicle-body 101 is preferably located between the front wheels 107 and the rear wheels 108.

In addition, the front wheels 107 are preferably driving and steering wheels, whereas the rear wheels 108 are preferably driving and optionally also steering wheels.

In other words, in the example shown, the motor vehicle 100 is preferably a road-use car, i.e. a road motor vehicle for the private transport of persons.

With reference to Figure 1, on the other hand, the powertrain 102 preferably comprises a motorised wheel hub 1 for each ground resting wheel of the vehicle, advantageously each combined with a respective electric power supply unit 104.

Preferably, each electric power supply unit 104 is furthermore located within the rigid vehicle-body 101, close to the respective motorised wheel hub 1.

More specifically, the powertrain 102 preferably comprises a pair of front wheel hubs 1 and a pair of rear wheel hubs 1 (not visible in Figure 1), advantageously combined with as many independent electric power supply units 104.

The front wheels 107 are therefore removably fitted/ mounted each on a respective front wheel hub 1. The rear wheels 108, on the other hand, are removably fitted/mounted each on a respective rear wheel hub 1 (not visible in Figure 1) .

The front motorised wheel hubs 1 of the powertrain 102 are clearly adapted to drive into rotation the front wheels 107, while the rear motorised wheel hubs 1 (not visible in Figure 1) are adapted to drive into rotation the rear wheels 108.

In the example shown, therefore, the front and rear motorised wheel hubs 1 of the powertrain 102 are preferably arranged in pairs on opposite sides of the vehicle vertical midplane, in a substantially specular position with respect to the latter, i.e. substantially at the vertices of a rectangle or an isosceles trapezium.

Preferably, the passenger compartment of the rigid vehicle-body 101 is furthermore located between the pair of front motorised wheel hubs 1 and the pair of rear motorised wheel hubs 1 of the powertrain 102.

In a different embodiment, however, the powertrain 102 could comprise only the pair of front motorised wheel hubs 1 or only the pair of rear motorised wheel hubs 1.

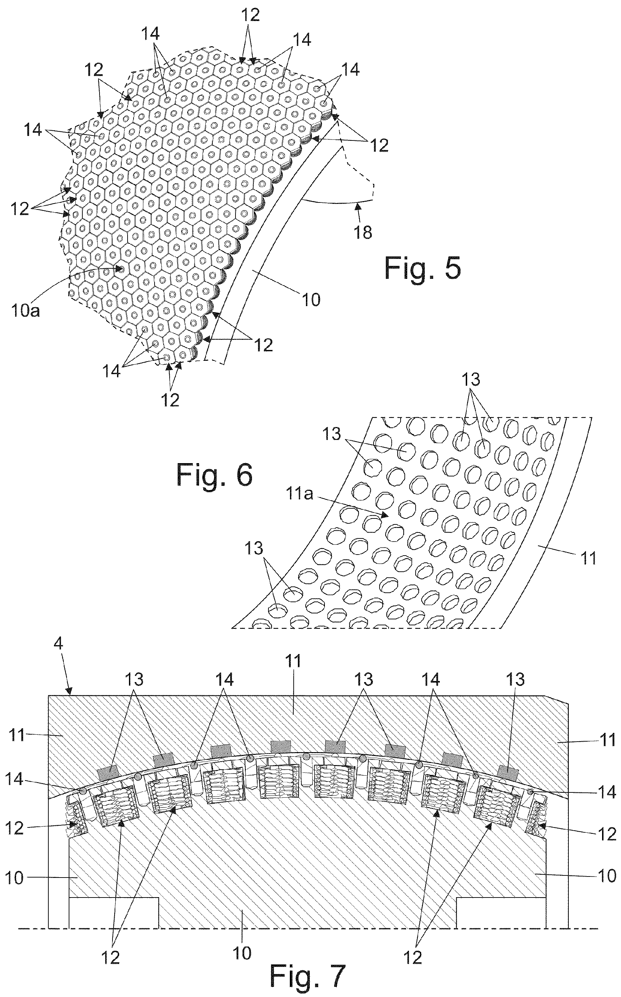

With reference to Figures 1 to 9, moreover each motorised wheel hub 1 is preferably located inside a wheel arch compartment 109 specially made in the rigid vehicle-body 101, and is preferably stably connected to the rigid vehicle-body 101 via a suspension (not shown in the figures), advantageously with an articulated quadrilateral or multilink geometry, which allows the same motorised wheel hub 1 to move vertically with respect to the rigid vehicle-body 101 in an elastic manner.

In addition, the/each motorised wheel hub 1 comprises: a central supporting body 2 advantageously made of metallic material, which is structured so as to be stably fixed to the vehicle suspension (not shown in the figures), advantageously by means of a pair of swing arms; an electric motor 3 for auto-traction, which is supported by said central supporting body 2 and is, in turn, structured so as to (directly) support and drive into rotation the driving wheel 107 or 108 of the vehicle about the rotation axis R; and an electromagnetic rotary actuator 4, which is interposed between the electric motor 3 and the central supporting body 2, and is structured so as to vary/regulate, on command, the inclination/spatial orientation of the electric motor 3 with respect to the same central supporting body 2.

More specifically, the rotation axis of electric motor 3 substantially coincides with the wheel rotation axis R. Instead, the electromagnetic rotary actuator 4 is structured so as to rotate, on command and for a limited number of degrees, the electric motor 3 with respect to the central supporting body 2 about at least a first transversal reference axis, which is preferably substantially perpendicular to the wheel rotation axis R and advantageously is, in uses, also substantially horizontal.

In addition, each motorised wheel hub 1 preferably further comprises a supplementary electronic control unit 5, which is adapted to command the electromagnetic rotary actuator 4 so as to vary, on command and advantageously also in real time, the inclination/spatial orientation of the electric motor 3 with respect to the central supporting body 2, i.e. the alignment of the rotation axis R with respect to the central supporting body 2.

Preferably, the supplementary electronic control unit 5 is also commanded by said vehicle control unit 105.

More specifically, the central supporting body 2 is preferably provided with a projecting appendage 2a, which extends cantilevered while remaining locally substantially coaxial with a predetermined longitudinal axis A, which is advantageously substantially horizontal and/or substantially perpendicular to the vehicle vertical midplane.

The electromagnetic rotary actuator 4 is preferably stably fixed on the projecting appendage 2a of supporting body 2, while the electric motor 3 is preferably fitted on and rigidly fixed to the electromagnetic rotary actuator 4.

In other words, the electric motor 3 preferably surrounds and accommodates, inside itself, the electromagnetic rotary actuator 4.

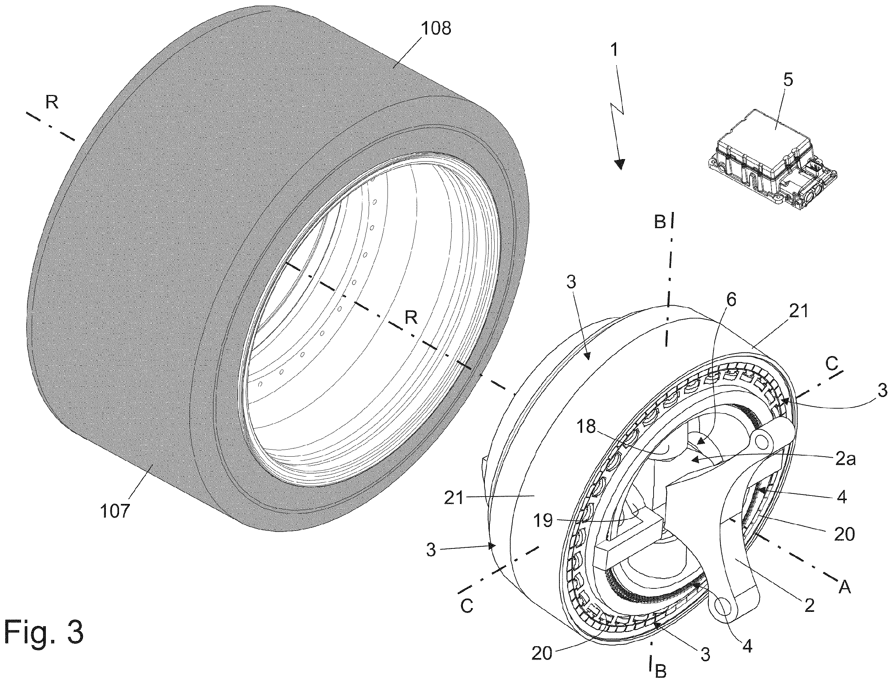

With reference to Figures 3 to 9, in particular, the electromagnetic rotary actuator 4 is preferably a spherical electromagnetic actuator, advantageously with a structure analogous to that of a synchronous permanent-magnet spherical motor.

In addition, the electromagnetic rotary actuator 4 is preferably fitted on the projecting appendage 2a of supporting body 2, and is preferably also stably fixed to the same projecting appendage 2a via a cardan joint 6.

More specifically, the electromagnetic rotary actuator 4, or rather the spherical electromagnetic actuator, comprises an annular stator assembly 10 and an annular rotor assembly 11, which are stably inserted one into the other and are overall structured so as to form a spherical joint, which allows the annular rotor assembly 11 to rotate freely around the annular stator assembly 10 in any direction.

In other words, the annular rotor assembly 11 surrounds the annular stator assembly 10 and is fitted in free slidable /rotatable manner on the outer periphery of the latter.

Preferably, the electromagnetic rotary actuator 4 moreover comprises a rolling-balls bearing, which is interposed between the annular stator assembly 10 and the annular rotor assembly 11 so as to minimise friction between the two components.

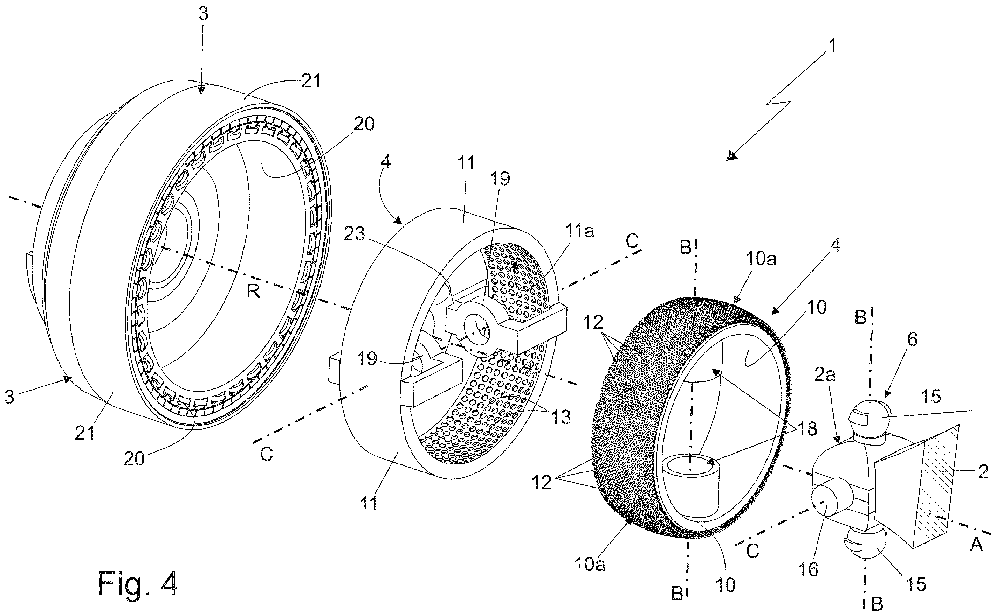

With particular reference to Figures 4, 5 and 6, in addition, the annular stator assembly 10 is provided with a multitude of small concentrated electrical windings 12, which are suitably distributed around the centre of rotation of the spherical joint, and are adapted to generate, when electric current flows through them, a stationary radial magnetic field on the outer peripheral surface 10a of the annular stator assembly 10. The spatial orientation of said stationary radial magnetic field can be modified as desired by appropriately regulating/varying the electric current circulating in the various concentrated electrical windings 12.

The electronic control unit 5, in turn, is adapted to supply electric current to the various concentrated electrical windings 12 of the annular stator assembly 10, advantageously by controlling the intensity and direction of the electric current circulating in each individual concentrated electrical winding 12, so as to control the orientation of said stationary radial magnetic field with respect to the centre of rotation of the spherical joint formed by the annular stator assembly 10 and the annular rotor assembly 11.

More specifically, the electronic control unit 5 is preferably adapted to power the various concentrated electrical windings 12 of the annular stator assembly 10, so as to obtain a stationary radial magnetic field with a specific spatial orientation. By suitably modifying the powering of the various concentrated electrical windings 12, the electronic control unit 5 is moreover able to modify, on command, the spatial orientation of the aforementioned stationary radial magnetic field.

The annular rotor assembly 11, on the other hand, is preferably provided with a multitude of small permanent magnets 13, which are suitably distributed in the body of the annular rotor assembly 11, close to the annular stator assembly 10, so as to generate, within the annular rotor assembly 11, a second stationary radial magnetic field, which interacts with the stationary radial magnetic field generated by the concentrated electrical windings 12 of the annular stator assembly 10.

More specifically, the radial magnetic field generated by the permanent magnets 13 tends to align with the stationary radial magnetic field generated by the concentrated electrical windings 12 of the stator assembly 10.

The spatial orientation of the magnetic field generated by the concentrated electrical windings 12 of the annular stator assembly 10 therefore determines the angular position of the (outer) annular rotor assembly 11 with respect to the (inner) annular stator assembly 10.

The electronic control unit 5 is therefore able to regulate/control the angular position of the annular rotor assembly 11 with respect to the annular stator assembly 10 by appropriately powering the various concentrated electrical windings 12 of the annular stator assembly 10.

With reference to Figures 3 to 9, in addition, the annular stator assembly 10 is fitted on the central supporting body 2, or rather on the distal end of the projecting appendage 2a of the central supporting body 2, advantageously so as to be locally substantially coaxial with the longitudinal axis A, and is preferably also stably pivotally joined to the central supporting body 2, or rather to the projecting appendage 2a of the central supporting body 2, so as to freely rotate with respect to the latter about a first transversal rotation axis B.

The annular rotor assembly 11, on the other hand, is preferably locally substantially coaxial with the wheel rotation axis R, and is stably pivotally joined to the central supporting body 2, or rather to the projecting appendage 2a of the central supporting body 2, so as to freely rotate about a second transversal rotation axis C, which is substantially orthogonal, and advantageously also substantially coplanar, with the rotation axis B.

In addition, the transversal rotation axis C is also substantially perpendicular to the wheel rotation axis R.

The transversal rotation axes B and C are therefore the articulation axes of the cardan joint 6.

In addition, the centre of rotation of the spherical joint formed by the annular stator assembly 10 and the annular rotor assembly 11 of the electromagnetic rotary actuator 4 is preferably located on the rotation axis C, so that the annular rotor assembly 11 can rotate freely about the rotation axis C.

More specifically, the centre of rotation of the spherical joint formed by the annular stator assembly 10 and the annular rotor assembly 11 of the electromagnetic rotary actuator 4 is preferably arranged at intersection of the rotation axes B and C.

The rotation axis C therefore corresponds to said first transversal reference axis.

Preferably, the rotation axis B and/or the rotation axis C is/are also transversal or, more advantageously, perpendicular to the longitudinal axis A of the central supporting body 2.

In other words, the rotation axes B and C preferably lie on a same plane advantageously perpendicular to the longitudinal axis A of the central supporting body 2.

Preferably, when the wheel hub 1 is mounted on the motor vehicle 100, the transversal rotation axis C is also substantially horizontal and advantageously also substantially parallel to the vehicle vertical midplane, i.e. substantially parallel to the vehicle longitudinal axis L.

The transversal rotation axis B, on the other hand, is advantageously substantially vertical. In other words, axis B is the steering axis of the wheel.

With reference to Figures 4 to 9, in the example shown, in particular, the outer peripheral surface 10a of the annular stator assembly 10 is preferably shaped substantially in the form of a regular hexahedral polyhedron, and the concentrated electrical windings 12 are preferably located at the faces of said regular hexahedral polyhedron.

More specifically, the annular stator assembly 10 is preferably provided with a multitude of small independent cylindrical coils, which are arranged on the outer periphery of the annular stator assembly 10, each aligned with the centre of a respective face of said regular hexahedral polyhedron, and are oriented radially with respect to the centre of rotation of the spherical joint. Each radial cylindrical coil forms a respective concentrated electrical winding 12.

Advantageously, the independent cylindrical coils are moreover preferably recessed in the body of the annular stator assembly 10, immediately underneath the outer peripheral surface 10a.

The annular rotor assembly 11, on the other hand, is preferably provided with a multitude of small, substantially discoidal-shaped, permanent magnets, which are distributed in a substantially regular manner on the inner periphery of the annular rotor assembly 11, and are arranged so that the produced magnetic field is locally oriented radially with respect to the centre of rotation of the spherical joint formed by the annular stator assembly 10 and the annular rotor assembly 11 of the electromagnetic rotary actuator 4.

More specifically, the discoidal permanent magnets are preferably recessed in the body of the annular rotor assembly 11, immediately underneath the inner concave surface 11a.

On the other hand, the rolling-balls bearing of the electromagnetic rotary actuator 4 preferably comprises a multitude of Hudson bearings 14, which are distributed, advantageously in a substantially regular manner, over the entire outer peripheral surface 10a of the annular stator assembly 10.

More specifically, the Hudson bearings 14 are preferably each located at the centre of a respective face of said regular hexahedral polyhedron, above a respective concentrated electrical winding 12, or rather above a respective independent cylindrical coil.

Preferably, the electromagnetic rotary actuator 4 is finally structured so as to vary, as desired, the angle of inclination between the central axis of the annular rotor assembly 11 (i.e. the rotation axis R) and the central axis of the annular stator assembly 10 (i.e. the longitudinal axis A) up to a limit value less than or equal to ±8°, or more conveniently less than or equal to ±5°.

With reference to Figures 3, 4, 8 and 9, in the example shown, furthermore, the projecting appendage 2a of the central supporting body 2 is preferably structured so as to form the spider of the cardan joint 6.

More specifically, the projecting appendage 2a of the central supporting body 2 is preferably provided with a first pair of connection pins 15, advantageously with a spherical head, which project cantilevered from opposite sides of the same projecting appendage 2a while remaining locally coaxial with the rotation axis B, and with a second pair of advantageously substantially cylindrical, connection pins 16, which project cantilevered from opposite sides of the same projecting appendage 2a while remaining locally coaxial with the rotation axis C.

The connection pins 15 preferably engage in freely rotatable manner respective, advantageously complementary shaped, coupling seats 18, which are made in a diametrical position in the body of the annular stator assembly 10 of the electromagnetic actuator 4, advantageously inside the central cavity of the same annular stator assembly 10.

The connection pins 16, on the other hand, preferably engage, in freely rotatable manner, respective, advantageously complementary shaped, coupling bushings 19, which are arranged inside the central cavity of the annular stator assembly 10 on opposite sides of the central supporting body 2, both locally coaxial with rotation axis C, and are rigidly fixed to the annular rotor assembly 11 of the electromagnetic actuator 4 by means of respective diametral connection brackets.

In other words, the coupling bushings 19 are integral with the annular rotor assembly 11 of the electromagnetic rotary actuator 4.

With reference to Figures 2 to 9, on the other hand, the electric motor 3 is preferably a polyphase (three-phase) alternating current electric motor, and is fitted on the annular rotor assembly 11 of the electromagnetic rotary actuator 4 so as to be locally coaxial and integral with the same annular rotor assembly 11.

More specifically, the electric motor 3 comprises: an inner stator 20 advantageously with a substantially cylindrical tubular structure, which is adapted to generate a rotating magnetic field when an alternating electric current flows through it; and an outer rotor 21 with a cup-like structure, which is fitted on and fixed in axially rotatable manner to the stator 20, so as to be driven into rotation about its central axis by the rotating magnetic field generated by the stator 20.

The inner stator 20 is rigidly fitted on the annular rotor assembly 11 of the electromagnetic rotary actuator 4, so as to be locally coaxial with the same annular rotor assembly 11, and therefore with the rotation axis R, and to move in space together with said annular rotor assembly 11.

The electromagnetic rotary actuator 4 is therefore located inside the electric motor 3, advantageously in the centre of the same motor.

The rotor 21, on the other hand, is fitted with clearance on the stator 20 and is preferably kept coaxial with the latter by means of a centring and support bearing 22, which is interposed between the rotor 21 and the stator 20 and/or between the rotor 21 and the annular rotor assembly 11 of the electromagnetic rotary actuator 4.

In the example shown, in particular, the centring and support bearing 22 is preferably interposed between the rotor 21 and a spacer bushing 23, which is coaxial with the rotation axis R and is integral with the body of the annular rotor assembly 11 of the electromagnetic actuator 4.

The stator 20, in addition, is provided with a series of electrical windings, which are suitably spaced/distributed around the longitudinal/central axis of the motor, i.e. around the rotation axis R, so as to generate, when an alternating electric current flows through them, a rotating radial magnetic field that affects the outer rotor 21.

The rotor 21, on the other hand, is preferably provided with a series of permanent magnets, which are distributed around the longitudinal/central axis of the motor, i.e. around the rotation axis R, and generate a second radial magnetic field that interacts in known manner with the rotating magnetic field produced by the stator.

The structure of the stator 20 and of the rotor 21 are of a known type and therefore will not be further described.

The general operation of the motorised wheel hub 1 and of the motor vehicle 100 is easily inferable from what written above.

The electronic control unit 5 of the motorised wheel hub 1 commands the electromagnetic rotary actuator 4, or rather supplies the electric current to the concentrated electrical windings 12 of the annular stator assembly 10, so as to vary/regulate, in real time, the inclination angle β of the wheel rotation axis R with respect to the longitudinal axis A of the supporting body 2.

The vehicle control unit 105, in turn, is preferably connected to one or more steering angle sensors, accelerometric sensors, roll, yaw and/or pitch sensors, inclination sensors and/or the like, and is preferably adapted to command the electronic control unit 5 on the basis of the signals coming from these attitude sensors.

Clearly, since the wheel lying plane P is conventionally perpendicular to the rotation axis R, any variation of the inclination angle β results in a variation of the inclination angle α of the wheel lying plane P with respect to the vertical, conventionally called camber angle.

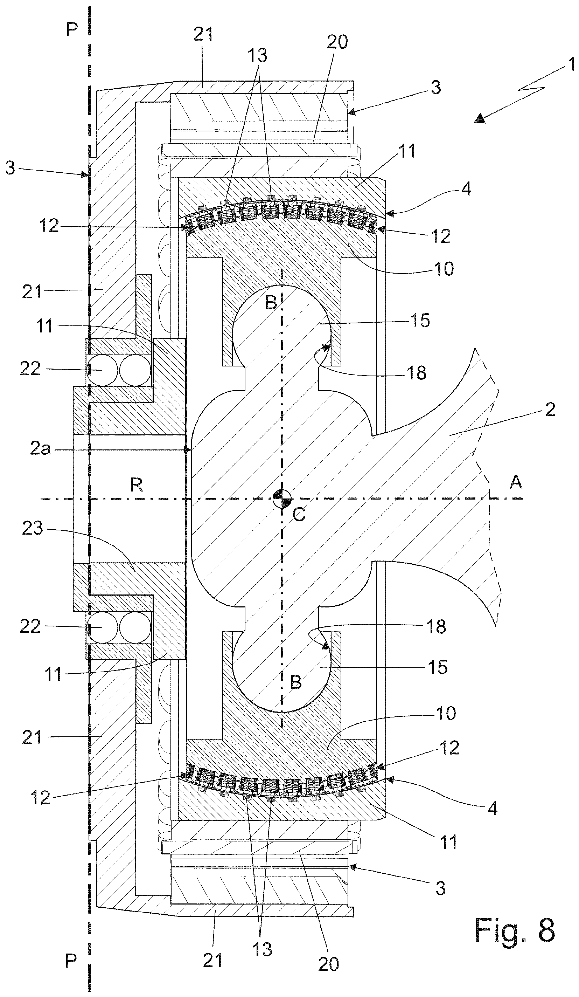

More specifically, with reference to Figure 8, if the motor vehicle 100 needs to have a camber angle α equal to 0°, the electronic control unit 5 commands the electromagnetic rotary actuator 4, or rather powers the concentrated electrical windings 12 of the annular stator assembly 10, so as to arrange the rotation axis R in a horizontal position, or rather at an angle of 90° with respect to the vertical.

In other words, assuming that the longitudinal axis A is perfectly horizontal, the electronic control unit 5 commands the electromagnetic rotary actuator 4 so as to arrange and maintain the annular rotor assembly 11 perfectly coaxial with the longitudinal axis A of the central supporting body 2.

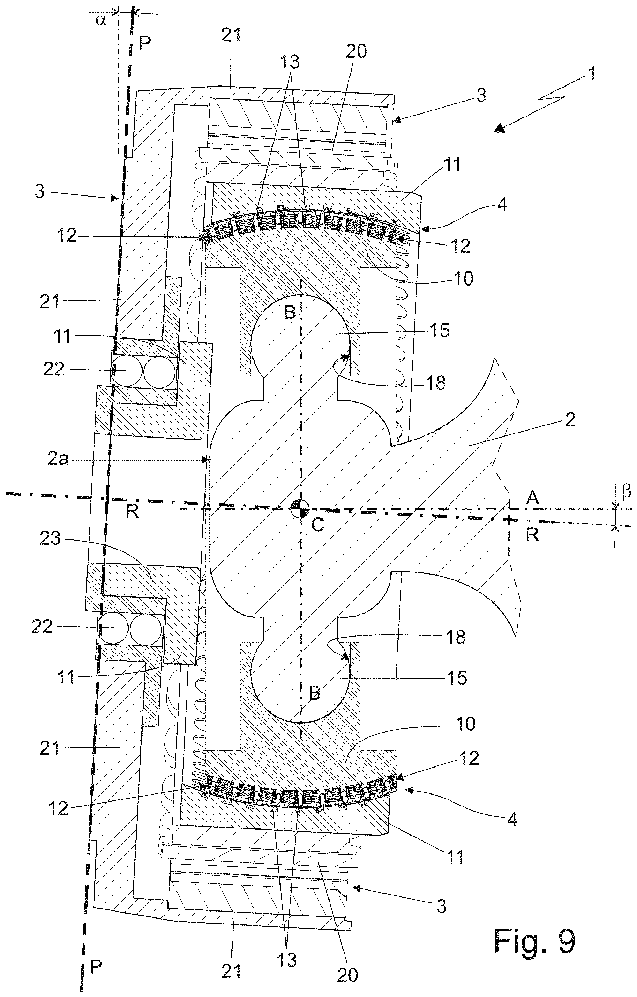

With reference to Figure 9, if instead the motor vehicle 100 needs to have a camber angle α of -3°, the electronic control unit 5 of the motorised wheel hub 1 commands the electromagnetic rotary actuator 4, or rather powers the concentrated electrical windings 12 of the annular stator assembly 10, so as to incline the rotation axis R by 93° with respect to the vertical.

In other words, assuming that the longitudinal axis A is perfectly horizontal, the electronic control unit 5 commands the electromagnetic rotary actuator 4 so as to incline the central axis of the annular rotor assembly 11 (i.e. the rotation axis R) by 3° with respect to the longitudinal axis A of the central supporting body 2.

The advantages connected with the particular structure of the motorised wheel hub 1 are remarkable.

The presence of the electromagnetic rotary actuator 4 in the motorised wheel hub 1 allows the camber angle of the wheel mounted on the wheel hub 1 to be varied at will and in real time.

In addition, the spherical structure of the electromagnetic rotary actuator 4 and the arrangement of the electromagnetic rotary actuator 4 inside the electric motor 3 allow to realize an extremely compact wheel hub 1, with a reduced number of moving parts.

Finally, it is clear that modifications and variations may be made to the motorised wheel hub 1 and to the motor vehicle 100 without departing from the scope of the present invention.

For example, in a less sophisticated embodiment, the annular stator assembly 10 of the electromagnetic rotary actuator 4 could be rigidly fixed to the central supporting body 2, or rather to the distal end of the projecting appendage 2a of the central supporting body 2.

In other words, the connection pins 15 could be replaced by radial elements that rigidly connect the central supporting body 2, or rather the projecting appendage 2a of the central supporting body 2, to the body of the annular stator assembly 10.

## Claims

1. Motorised wheel hub (1) **characterised by** comprising:
a central supporting body (2), which is structured so as to be fixed to the vehicle suspension; an electric motor (3) for auto-traction, which is supported by said central supporting body (2) and is structured so as to support and
drive into rotation the wheel of the vehicle (107, 108) about a wheel rotation axis (R); and an electromagnetic rotary actuator (4), which is interposed between the electric motor (3) and the central supporting body (2), and is structured so as to vary the orientation of the electric motor (3) with respect to said central supporting body (2).

2. Motorised wheel hub according to claim 1, wherein the electromagnetic rotary actuator (4) is adapted to rotate, on command, the electric motor (3) with respect to said central supporting body (2) about at least a first transversal reference axis (C), which is substantially perpendicular to said wheel rotation axis (R).

3. Motorised wheel hub according to claim 1 or 2, wherein said wheel hub additionally comprises an electronic control unit (5) adapted to command said electromagnetic rotary actuator (4).

4. Motorised wheel hub according to claim 1, 2 or 3, wherein the central supporting body (2) is provided with a projecting appendage (2a), the electromagnetic rotary actuator (4) is stably fixed on said projecting appendage (2a), and the electric motor (3) is fitted on and fixed in rigid manner to the electromagnetic rotary actuator (4).

5. Motorised wheel hub according to any one of the preceding claims, wherein the electromagnetic rotary actuator (4) is a spherical electromagnetic actuator.

6. Motorised wheel hub according to claim 5, wherein the electromagnetic rotary actuator (4) comprises: an annular stator assembly (10) and an annular rotor assembly (11), which are stably inserted one into the other and are overall structured so as to form a spherical joint, which allows the annular rotor assembly (11) to rotate around the annular stator assembly (10) in any direction; the annular stator assembly (10) being provided with a multitude of concentrated electrical windings (12), which are suitably distributed around the centre of rotation of said spherical joint, and are adapted to generate, when electric current flows along them, a stationary radial magnetic field on the outer peripheral surface (10a) of the annular stator assembly (10).

7. Motorised wheel hub according to claim 6, wherein the electromagnetic rotary actuator (4) additionally comprises a rolling-balls bearing (14) interposed between said annular stator assembly (10) and said annular rotor assembly (11).

8. Motorised wheel hub according to claim 6 or 7, wherein the outer peripheral surface (10a) of said annular stator assembly (10) is shaped substantially in the form of a regular hexahedral polyhedron, and the concentrated electrical windings (12) are preferably located at the faces of said regular hexahedral polyhedron.

9. Motorised wheel hub according to claim 6, 7 or 8, wherein the annular rotor assembly (11) is provided with a multitude of permanent magnets (13), which are distributed in the body of the annular rotor assembly (11), close to the annular stator assembly (10), so as to generate a second radial magnetic field, which interacts with the stationary radial magnetic field generated by the concentrated electrical windings (12) of said annular stator assembly (10).

10. Motorised wheel hub according to any one of claims from 6 to 9, wherein the electronic control unit (5) is adapted to supply electric current to the various concentrated electrical windings (12) of the annular stator assembly (10), so as to control the spatial orientation of said stationary radial magnetic field.

11. Motorised wheel hub according to any one of claims from 6 to 10, wherein the annular stator assembly (10) is fitted on the central supporting body (2), and the annular rotor assembly (11) surrounds the annular stator assembly (10) and is stably pivotally joined to the central supporting body (2) so as to freely rotate about a first transversal rotation axis (C), which is substantially perpendicular to said wheel rotation axis (R).

12. Motorised wheel hub according to claim 11, wherein the annular stator assembly (10) is stably pivotally joined to the central supporting body (2) so as to rotate with respect to the latter about a second transversal rotation axis (B), which is substantially orthogonal to said first transversal rotation axis (C).

13. Motorised wheel hub according to any one of claims from 6 to 12, wherein the annular rotor assembly (11) surrounds the annular stator assembly (10) and the electric motor (3) is rigidly fitted on said annular rotor assembly (11).

14. Motorised wheel hub according to claim 13, wherein the electric motor (3) comprises: a stator (20) with a substantially tubular structure, which is rigidly fitted on the annular rotor assembly (11) of the electromagnetic rotary actuator (4), and is adapted to generate a rotating magnetic field when an alternate electric current flows through it; and a rotor (21) with a cup-like structure, which is fitted with clearance on the stator (20), and is fixed in axially rotatable manner to the stator (20) so as to be drawn into rotation about its central axis by the rotating magnetic field generated by said stator (20).

15. A road motor vehicle (100) comprising: a rigid vehicle-body (101) provided with ground resting wheels (107, 108); a powertrain (102), which is adapted to drive into rotation at least a first wheel of said ground resting wheels (107, 108); and an electric-energy accumulator (103), which is capable of storing within itself a given quantity of electrical energy to be supplied to said powertrain (102);
said powertrain (102) comprising at least one motorised wheel hub (1), which supports and is adapted to drive into rotation said first ground resting wheel (107, 108);
the motor vehicle (100) being **characterised in that** said motorised wheel hub (1) is realized according to any one of the preceding claims.
